# EUROPEAN PATENT APPLICATION

(11) **EP 3 401 859 A1**
(43) Date of publication of application: **14.11.2018**
(21) Application number: 18171771.1
(22) Date of filing: 11.05.2018
(51) Int. Cl.: G06Q 10/08, G06Q 20/40, G06Q 30/04, G06Q 20/10, G06Q 40/00

(54) **A SYSTEM AND A METHOD FOR PROCESSING AND RECONCILING AN INVOICE DATA FILE**

(30) Priority: 11.05.2017 FR 1754112; 11.05.2017 US 201715592615
(71) Applicant: Amadeus S.A.S., 06410 Biot (FR)
(72) Inventor: FREDRIKSSON, Eva Marianne Beatrice, 302 91 Halmstad (SE); BOECKX, Frank, 1800 Vilvoorde (BE); HANNES, Peter, 2350 Vosselaar (BE); MAES, Wim, 2640 Mortsel (BE)
(74) Representative: Gevers Patents

(57) **Abstract**

The present invention provides a system and method for performing account reconciliation over a computer network. The system 10 comprises means for receiving an invoice (30), and actual sales database (14) and a reconciliation network platform (15). The reconciliation network platform (15) processes the supplier invoice (30) to extract and store the corresponding SII data in a set of SII records (SII1-4). A reconciliation module 22 is provided for selecting, based on at least one Reconciliation Criterion, SII records (SII1-4) and ASI records (ASI1-6) for reconciliation. The reconciliation module (22) is configured for aggregating and storing, for each Reconciliation Criterion, the values of the selected SII and ASI records into a set of corresponding data fields of a Reconciliation Item Record (38). The reconciliation module (22) further compares the aggregated values of the corresponding data fields of the Reconciliation Item Record (38) and determines a reconciliation status (36b).

## Description

### Technical field

The present invention relates to a system and a method for performing reconciliation of accounts over a computer network. More specifically the present invention is directed to a system and a method for performing supplier invoice reconciliation.

### Background art

EP2413279B1 describes a computer implemented method for reconciling billing data in a telecommunication network. More specifically, the reconciliation method described therein enables the reconciliation of accounts between a mobile virtual network host (MVNO) and a mobile host operator (MHO).

However, despite the advancements in technology, the processing and reconciliation of supplier invoices containing at least a list of items purchased from a supplier, such as goods and/or services, remains a complex and time-consuming process.

In general, supplier invoices may be received by the accounting department of a commercial entity in either paper or electronic format, such as pdf, excel, etc. The information contained in the received invoice may then be entered into an accounting system for processing and reconciliation. However, even with the use of highly automated processes for entering data into an accounting system, e.g. document scanning techniques, much of the data contained in the supplier invoice data file may still need to be managed, e.g. entered or modified, manually by the user to ensure the correct processing of the supplier invoice by the accounting system. This is due to the widely varying formats used by the suppliers for issuing a supplier invoice, which rarely meet the requirements of the accounting system used by the commercial entity, thus necessitating the manual management of the supplier invoice data by the user. For example, received supplier invoices may be missing certain pieces of data, e.g. the supplier reference, the type of supplier items purchased, the due date for payment, etc. or the supplier invoice data may be presented in a non-compatible format, e.g. representation of currencies, unstructured data, use of wrong reference codes, etc.. However, the need for manually managing the data of each received supplier invoice greatly increases the human resources and time required for processing and reconciliation, especially when considering the number of invoices received each day by a commercial entity that need to be processed within a specified time frame. Moreover, the manual management of data is a common source of data inaccuracies that may greatly affect the quality of data entered into the accounting system and may further impact the results of the reconciliation process.

Once the invoice data has been entered into the accounting system, the user may continue to the supplier invoice reconciliation phase, so as to decide whether to pay or not the supplier invoice received. In general, supplier invoice reconciliation is performed by the person responsible for ordering the supplier invoice items, who validates the authenticity and correctness of the supplier invoice. The reconciliation phase may further involve a comparison between supplier invoice data entered in the accounting system and the purchase data of a purchase order issued, which may indicate the type of services/goods to be purchased and a budget. In practise, it is rarely the case that the purchase order would contain enough information regarding the individual supplier items to be purchased to make a reconciliation decision. As a result, the user would only be able to reconcile the supplier invoice based on very high level information, e.g. total cost of multiple supplied items, leading to highly inefficient and inaccurate invoice reconciliation.

In general, all received invoices have to be reconciled at some level manually, which makes the reconciliation process a highly time-consuming process. In some cases, in order to improve the efficiency of the reconciliation process, invoices received from assumed trusted suppliers may not be scrutinised as carefully as the ones received from a non-regular or one-off suppliers. In this case, although the amount may be checked, the supplier invoice would be automatically treated as genuine. Moreover, in order to further improve efficiency, some companies may automatically pay assumed trusted supplier invoices that are below a certain amount. However, such practices for improving the efficiency of the reconciliation process may be highly insecure and may lead to fraudulent invoices, which appear to be genuine, to be automatically paid.

In view of the above, it can be considered that current procedures for processing and reconciling supplier invoices are costly in terms of manpower and time required, inefficient, inaccurate, and highly insecure.

### Disclosure of the invention

It is an aim of the present invention to provide a system for processing and reconciling supplier invoices that overcomes the problems of the current procedures.

More in particular, it is desired to provide a system and a method for processing and reconciling a supplier invoice received from a supplier in an efficient, accurate, cost effective and secure manner.

This is achieved according to the present invention with the system showing the technical characteristics of the first independent claim.

More specifically, a system is provided for performing account processing and reconciliation over a computer network. According to an aspect of the present invention, the system is provided with means for receiving a supplier invoice data file comprising at least a first set of invoice data comprising information on supplier items purchased from the supplier. The system of the present invention may be provided with an actual sales database comprising at least one Actual Sales Item (ASI) record comprising actual sales data for supplier items purchased from at least one supplier. The at least one Actual Sales Item (ASI) record being stored in the form of an Actual Sales Item (ASI) table comprising a number of Actual Sales Item (ASI) data fields each configured for storing an Actual Sales Item (ASI) data value in a predetermined data format. For the reconciliation of supplier invoice received a reconciliation network platform is provided. The reconciliation network platform is operative with the means for receiving the supplier invoice data file and with the actual sales database for reconciling the supplier items indicated in the supplier invoice data file with corresponding Actual Sales Item (ASI) records retrieved from the actual sales database. According to the present invention, the reconciliation network platform is provided with an invoice-processing module configured for processing the received supplier invoice data file so as to extract at least the first set of invoice data. The invoice processing module is configured for determining from the extracted first set of invoice data, Supplier Invoice Item (SII) data corresponding to each of the purchased supplier items indicated in the invoice data file. The invoice processing module is configured for storing in a first portion of a supplier invoice database each extracted Supplier Invoice Item (SII) data in the form of a Supplier Invoice Item (SII) record. Each Supplier Invoice Item (SII) record being stored in the form of an SII table comprising a set of Supplier Invoice Item (SII) data fields, each configured for storing a Supplier Invoice Item (SII) data value in a predetermined data format. The system of the present invention is further provided with an invoice reconciliation module configured for selecting for reconciliation, based on at least one Reconciliation Criterion (RC) comprising at least one Reconciliation Value (RV), at least one Supplier Invoice Item (SII) record from the Supplier Invoice Item (SII) database and at least one corresponding Actual Sales Item (ASI) record from the actual sales database. The invoice reconciliation module is configured for selecting Supplier Invoice Item (SII) and Actual Sales Item (ASI) records for reconciliation by comparing the value of each Reconciliation Criterion (RC) against the data values stored in the set of Supplier Invoice Item (SII) data fields and corresponding Actual Sales Item (ASI) data fields of respectively the Supplier Invoice Item (SII) and Actual Sales Item (ASI) tables to identify matching Supplier Invoice Item (SII) records and corresponding matching Actual Sales Item (ASI) records. The invoice reconciliation module is configured for each Reconciliation Value (RV) or each combination of Reconciliation Values (RV), for aggregating and storing the values retrieved from the data fields of the identified matching Supplier Invoice Item (SII) records and corresponding matching Actual Sales Item (ASI) records into respectively a set of corresponding Supplier Invoice Item Reconciliation (SIIR) data fields and a set of Actual Sales Item Reconciliation (ASIR) data fields of at least one Reconciliation Item (RI) record. The Reconciliation Item (RI) record is stored in a Reconciliation record database in the form of at least one Reconciliation Item (RI) table. The invoice reconciliation module being further configured for reconciling the identified matched Supplier Invoice Item (SII) records with the corresponding matched Actual Sales Item (ASI) records by comparing the values stored in the Supplier Invoice Item Reconciliation (SIIR) data fields with the values stored in the corresponding Actual Sales Item Reconciliation (ASIR) data fields of the at least one RI record (38) so as to identify any differences. The invoice reconciliation module is configured for storing the values of the comparison in a set of reconciliation data fields of the at least one RI record, and for updating the RI record with a reconciliation status indicating the status of the reconciliation. For example, the reconciliation status may indicate whether the reconciliation for each Supplier Invoice Item (SII) was successful or not.

It has been found that, with the system of the present invention, the problems associated with the current procedures for processing and reconciling supplier invoices can be overcome. More specifically, with the use of the invoice processing module, the supplier invoice data may be extracted with limited manual intervention by the user, irrespective of the format in which it is presented, thus greatly improving the efficiency, cost effectiveness and accuracy of the supplier invoice processing. Furthermore, by providing a reconciliation network platform, which is connected to an actual sales database, the system significantly increases the accuracy and transparency of the reconciliation process. This is because, with the use of the reconciliation platform, the reconciliation is performed at the level of the individual SII records, thus allowing a one-to-one comparison between the SII data extracted directly from the supplier invoice and the corresponding ASI data extracted from the actual sales database. Furthermore, reconciling the supplier invoice with actual sales data has been found to significantly increase the security of the reconciliation process. This is because, in the case of a fraudulent invoice, the reconciliation network platform would not be able to retrieve any ASI records from the actual sales database, thus leading to an unsuccessful reconciliation and prompting the user as to its cause. Moreover, the use of at least one reconciliation criterion for selecting the SII and ASI records for reconciliation significantly increases the usability of the system by allowing the filtering of data on which the reconciliation is to be performed, which further leads to a significant improvement in the speed and ease of use of the reconciliation process.

According to an embodiment of the present invention, the invoice processing module is configured for determining, from the extracted supplier invoice data a second set of data comprising generic Supplier Invoice (SI) data. For example, the generic Supplier Invoice (SI) data may include information for identifying the supplier of the invoice such as the name of the supplier, telephone number, address, bank details, and the like. The invoice processing module is configured for storing at least a portion of the second data in a second portion of the supplier invoice database in the form of a Supplier Invoice (SI) record in a SI table comprising a set of Supplier Invoice (SI) data fields. The extracted SI data may be used by reconciliation network platform to identify the correct SII records and corresponding ASI records from the respective databases. The use of additional information in the reconciliation process may have the advantage of increasing the speed, accuracy and security of the reconciliation. The reconciliation network platform may, for example, use the SI data of the supplier invoice to enhance the accuracy of the process of linking SII records to corresponding ASI records. Alternatively or additionally, the system may use machine learning to link more precisely the SII records with corresponding ASI records, with human or other corrective measures being used by the system to improve its "knowledge" of likely links.

According to embodiments of the present invention, the reconciliation module is configured for selecting the SIIs and ASIs for reconciliation based on the combination of a plurality of reconciliation criteria. The reconciliation module may combine the values of two or more Reconciliation Criteria (RC) in order to further increase the accuracy of the process of matching SII records to ASI records and further reduce the amount of data to be reconciled. For example, by using the reconciliation criterion "Supplier ID" with value "supplier X" in combination with the reconciliation criterion "Supplier item type" with value "type X" would direct the reconciliation module to retrieve only those SII and ASI records with values matching the values of the reconciliation criteria.

According to embodiments of the present invention, the reconciliation network platform comprises a reconciliation criterion generation tool configured for generating the plurality of Reconciliation Criteria (RC) from a set of data fields selected from the SI and/or Slls tables that correspond to data fields of the ASI table. Using the reconciliation criterion generation tool greatly simplifies the generation of relevant Reconciliation Criteria (RC) to be used in the reconciliation process for selecting relevant SII and ASI records for reconciliation. The Reconciliation Criteria (RC) may be used individually or in combination by the reconciliation module. For example, the list of reconciliation criteria may be presented to a Graphic User Interface of a user terminal, whereby a user makes a selection of the reconciliation criteria to be used in the reconciliation process. In another example, the reconciliation criterion generation tool may communicate the reconciliation criteria directly to the reconciliation module, thus significantly reducing the manual intervention required by the user during the reconciliation process. Furthermore, the reconciliation criterion generation tool may generate the reconciliation criteria from data fields that have been identified as being common in both the SI/SII tables and ASI tables. By identifying the commonly-used data fields in both databases (the actual sales database and the supplier invoice database) it is ensured that each reconciliation criterion would return usable data. For example, the process of determining the suitability of each data field as a reconciliation criterion may involve, but not be limited to, the steps of: checking if each data field of the SI and/or SII record has a corresponding data field in the ASI record, and creating a list of commonly used data fields to be used as reconciliation criteria by the reconciliation module. Moreover, the reconciliation criteria generation tool may generate a list of reconciliation criteria based on historical information collected from previous reconciliation processes. Additionally or alternatively, the reconciliation module may hierarchically go through the data fields of each database and compare the resulting values to identify matching SII and ASI records.

According to embodiments of the present invention, the reconciliation network platform is configured for generating, based on the results of the reconciliation, a number of follow up actions to a Graphic User Interface of a user terminal selected from the group consisting of: reject invoice, accept invoice, report invoice, commission tracking, and bill back. Providing the user with a number of follow up actions, which have been determined based on the results of the reconciliation, greatly simplifies the reconciliation process and further reduces the skill of the user required for performing the reconciliation and follow up of the supplier invoices. This overcomes the problems with traditional reconciliation procedures, where the reconciliation follow-up actions need to be manually determined by the user, based on the status of the reconciliation, and executed using separate system modules, thus increasing the complexity and time required for completing the reconciliation process. For example, in traditional reconciliation systems, the actions of commission tracking and bill back require the processing of the invoice by separate modules of the system. The system of the present invention may detect the expected follow-up actions based on information extracted directly from the supplier invoice, which are presented to the user for selection and execution, resulting in an improved accuracy of the follow-up actions generated. Additionally or alternatively, the system of the present invention may use machine learning for determining the expected follow-up actions, thus further improving the accuracy of the generated follow-up actions. For example, the system may use historical information to determine the most appropriate follow-up action for the supplier invoice being processed by the system. The system may be operatively coupled to at least one invoice follow-up module configured for executing the invoice follow-up actions, so as to enable the gathering and sharing of historical information between different system modules. In this way, the system gathers more a wide range of information from across the system modules, which can be used to improve the accuracy of the reconciliation process. For example, with the system of the present invention the user may be directly presented - after a successful reconciliation - with a follow up action prompting them to pay the invoice. In another non-limiting example, the reconciliation network platform may indicate to the user that no ASI records were found and certain supplier invoice data need to be checked before proceeding. In yet another non-limiting example, the reconciliation network platform may indicate to the user that a commission amount needs to be paid by the supplier and it may prompt the user to select whether to deduct the commission from the current invoice or to send an invoice to the supplier for the commission. As a result, the user of the system does not need to be a skilled user having an expertise in accounting and reconciliation practices, since these tasks are performed by the system, leading to a more accurate and less complex processing of the supplier invoice.

According to embodiments of the present invention, the reconciliation network platform comprises a reconciliation intelligence unit arranged for collecting supplier invoice meta-data corresponding to the actions taken and modification made to the data during the processing and reconciliation of the supplier invoice data file. It has been found that providing a reconciliation intelligence unit has the advantage of greatly improving the efficiency, accuracy and security of the reconciliation process. For example, identifying how a previously-received supplier invoice data file was processed and reconciled, e.g. by identifying the type of reconciliation criteria used or type of SII records extracted, may enable the system to extract processing and reconciliation patterns that can be applied to similarly-received supplier invoices. As a result, applying historical meta-data to received invoices greatly improves the accuracy, efficiency and security of the reconciliation process.

According to embodiments of the present invention, the reconciliation intelligence unit is configured for storing the supplier invoice meta-data in a historical server database, which may be accessible by the reconciliation network platform. For example, the invoice-processing module of the reconciliation network platform may be configured for enriching the SI and SII records stored in the supplier invoice database with meta-data determined from the historical database. For example, in the case where the supplier invoice received contains a supplier item which is directed to a "room booking", the processing module using meta-data extracted from similarly-processed invoices may deduce that the supplier invoice item "type" is that of "accommodation", which is added to the SII record as a data field. Enriching the SI and SII records with meta-data extracted from the historical database greatly improves the quality of the data to be processed and reconciled, leading to a significant improvement in the efficiency, accuracy and security of the reconciliation process.

According to embodiments of the present invention, the system is in direct communication with a sales network platform comprising a Financial Item (FI) database containing a number of FI records each comprising FI data recorded at the time of purchase (or sale on behalf of the supplier) of each supplier item. According to embodiments of the invention, the system comprises a database manager configured for processing and transforming the FI records of the FI database so as to generate the ASI records to be stored in the actual sales database. It has been found that generating the ASI records based on the FI data contained in FI records stored in an FI database of a sales network platform that was used for the purchase of the supplier invoice items greatly improves the accuracy of the reconciliation process. This is because the ASI records used for the reconciliation are directly determined from FI data that was recorded by the sales network platform at the time of purchase of the supplier invoice item.

According to embodiments of the present invention, the database manager is configured for extracting a subset of the FI data corresponding to the ASI data fields of the ASI table to be populated. Selecting only relevant FI data corresponding to the ASI fields of the ASI table to be populated greatly reduces the amount of data to be used in the reconciliation process, thus significantly improving the accuracy and efficiency of the reconciliation process. For example, reducing the amount of data to be reconciled greatly reduces the time taken to identify the ASI records matching the at least one reconciliation criterion.

According to embodiments of the present invention, the database manager is configured for converting the format of the subset of FI data extracted into the data format of the actual sales database, e.g. convert amounts to a local currency. In this way, it is ensured that the FI data extracted is compatible with the format used by the actual sales database for storing the ASI records, thus avoiding incompatibility issues, which may affect the reconciliation process.

According to embodiments of the present invention, the database manager is configured for harmonising the FI data extracted with the data stored on the supplier invoice database. For example, the database manager may be configured for labelling the FI data extracted according to the labelling scheme of the SII and/or SI data stored in the supplier invoice database. By performing a data harmonisation, it is ensured that the ASI records and SII records would have a number of commonly designated data fields, which greatly reduces the complexity of matching ASI records to SII records, thus greatly improving the efficiency and accuracy of the reconciliation process.

According to embodiments of the present invention, the database manager is configured for enriching the FI data with meta-data extracted from historical database. Enriching the FI data with meta-data extracted from the historical database greatly improves the quality of the ASI data used in the reconciliation, leading to a significant improvement in the efficiency, accuracy and security of the reconciliation process.

According to embodiments of the present invention, the database manager is configured for monitoring the FI database for any changes made to the FI records and accordingly updating the corresponding ASI records stored in the actual sales database. By periodically or continuously checking whether the data stored in the FI records has been updated, it is ensured that the ASI records used in the reconciliation always contain up-to-date data, thus greatly improving the accuracy of the reconciliation process. For example, in the case where a change was made to the FI record of a supplier item purchased, e.g. a change in the quantity, the database manager updates the corresponding ASI record to reflect the changes made to the FI record. For example, the database manager may use a version identifier to determine the current version of the FI records stored in the actual sales database, which may then be compared to the version identifier of the corresponding ASI records stored in the actual sales database.

According to embodiments of the present invention, the system comprises an invoice generation tool configured for generating a supplier invoice, also referred to as "volatile" invoice directly from the ASI records stored in the actual sales database. The "volatile" invoice may be presented to the user for editing and further processing without the need for manually inputting a separate supplier invoice data file into the system, which greatly simplifying the processing of supplier invoices. In this way, it is possible to easily compare the "volatile" supplier invoice with the invoice received, thus greatly improving the speed and accuracy of the reconciliation process. The security of the reconciliation may further be enhanced with the generation of "volatile" invoices, since only invoices from trusted suppler can be generated from the ASI database for reconciliation. Furthermore, a "volatile" may be used for supplementing or replacing poor quality invoices received for reconciliation. For example, in the case of receiving a low quality supplier invoice containing insufficient level of information for performing the reconciliation, the user may generate a "volatile" invoice so as supplement the missing information identified, thus allowing for the reconciliation process to resume without the need for requesting additional information from the supplier issuing the invoice or rejecting the invoice. Furthermore, in some cases the user may decide to generate a supplier invoice for items purchased before the actual invoice is issued by the supplier. For example, for fiscal purposes, the user may desire to pay all outstanding purchases made during the fiscal year before the filing of the financial report with the tax authorities.

According to embodiments of the present invention, the invoice-processing module, the reconciliation module and the database manager are configured for optimising the storage of the records in the respective databases. As a result, the time for searching and retrieving data from the respective databases is greatly reduced, thus significantly increasing the efficiency in which the hardware resources of the system are used e.g. the memory access time, read/write database operations, computing power, network traffic. For example, the optimisation of the system hardware resources may be achieved by providing a "key" value representation of all data fields of the respective databases, which may be stored in the form of a key-value table. The key-value table may contain a collection of records containing data, each record uniquely identified by a "key" value. Thus, with the use of "key" values, the search for matching records can be performed at a higher level, thus significantly reducing query response times and computing power required. The "key" values may further result in the use of significant less memory to store the same database, which can lead to large performance gains in certain workloads, and significant reductions in computer power required and associated network data traffic. Furthermore, using "key" values may allow unstructured data to be used in the reconciliation process. Additionally or alternatively, the system hardware resources may be optimised by de-normalizing the respective system databases, and/or by indexing the columns of the SII and ASI tables stored therein for well-known data fields based on meta-data information extracted from the historical database. For example, the table indexes may be provided on most common combinations of data fields representing the matching criteria for identifying matching SII and ASI records from the respective system databases. The most common combinations of data fields may be determined either directly by the user or based on the historical information stored in the historical database. De-normalising may involve adding redundant copies of data or grouping data stored in the system databases, resulting in an increase in read performance of the database, which leads to significant improvements in the query response time.

According to a second aspect of the present invention, a method for performing reconciliation of accounts over a computer network is provided. The method comprises the steps of:
receiving by means a supplier invoice data file comprising supplier invoice data comprising at least a first set of invoice data comprising information on the supplier items purchased from the supplier;
providing an actual sales database comprising at least one Actual Sales Item (ASI) record comprising actual sales data for supplier items purchased from at least one supplier, the at least one ASI record being stored in the form of an ASI table comprising a number of ASI data fields, each configured for storing an ASI data value in a predetermined data format; and
reconciling the supplier items indicated in the supplier invoice data file with corresponding ASI records retrieved from the actual sales database,
wherein the step of reconciling comprises the steps of :
processing in an invoice-processing module the received supplier invoice data file (30) so as to extract at least the first set of invoice data,
determining by the invoice-processing module from the first set of invoice data (30a) Supplier Invoice Item, SII, data corresponding to each of the supplier items indicated in the invoice data file,
storing in a first portion of a supplier invoice database each extracted SII data in the form of a Supplier Invoice Item (SII) record, each SII record being stored in the form of an SII table comprising a set of SII data fields, each configured for storing an SII data value in a predetermined data format, and the extracting the supplier invoice data from the supplier invoice data file,
   selecting by means of an invoice reconciliation module, based on at least one reconciliation criterion comprising at least one reconciliation value, at least one SII record from the SII database and at least one corresponding ASI record from the actual sales database,
wherein the step of selecting the SII and ASI records for reconciliation comprises the step of comparing the values of each reconciliation criterion against the data values stored in the set of SII data fields and corresponding ASI data fields of respectively the SII and ASI tables to identify matching SII records and corresponding matching ASI records,
wherein, for each reconciliation value or each combination of reconciliation value, the step of reconciling further comprises the steps of:
   aggregating and storing the values retrieved from the data fields of the identified matching SII and ASI records into respectively a set of corresponding SII Reconciliation, SIIR, data fields and a set of ASI Reconciliation, ASIR, data fields of at least one Reconciliation Item (RI) record, the Reconciliation Item record stored in a Reconciliation record database in the form of at least one Reconciliation Item, RI, table,
   reconciling the identified matched SII records with the corresponding matched ASI records by comparing the values stored in the SIIR fields (35a) with the values stored in the corresponding ASIR fields of the at least one RI record so as to identify any differences,
   storing the values of the comparison in a set of reconciliation data fields (36a) of the at least one RI record, and
   updating the RI record with a reconciliation status indicating the status of the reconciliation.

According to embodiments of the present invention, a data carrier medium is provided configured for storing computer executable instructions, which, when loaded in a computer system, cause the computer system to perform the reconciliation method according to the second aspect of the present invention.

### Brief description of the drawings

The invention will be further elucidated by means of the following description and the appended figures.
Figure 1 shows an exemplified selling network platform for selling and buying goods and services over a computer network according to embodiments of the present invention.
Figure 2 shows an example of the Financial Item (FI) data stored in the FI database, which represent raw sales data generated during the sale and/or purchase of the goods and services from the supplier according to embodiments of the present invention.
Figure 3 shows an example of a supplier invoice data file received from a supplier according to embodiments of the present invention.
Figure 4 shows an exemplified Mid-Back Office (MBO) system according to embodiments of the present invention.
Figure 5 shows an exemplified system for performing processing and reconciliation of supplier invoices according to embodiments of the present invention.
Figure 6 shows a conversion example of the FI records presented in figure 2 into the ASI records according to embodiments of the present invention.
Figure 7 shows an exemplified system for performing the processing and reconciliation of the supplier invoices according to embodiments of the present invention.
Figure 8 shows an exemplified implementation of the invoice processing module according to embodiments of the present invention.
Figures 9 to 10 show an example of a conversion of supplier invoice data into respectively SI and SII records according to embodiments of the present invention.
Figure 11 shows an exemplified implementation of the reconciliation network platform according to embodiments of the present invention.
Figure 12 shows an exemplified implementation of the reconciliation module according to embodiments of the present invention.
Figure 13 shows an example of a set of reconciliation criteria used for selecting matching SII and ASI records from the respective system databases according to embodiments of the present invention.
Figure 14 shows an example of the aggregation of the identified matching SII and ASI records according to embodiments of the present invention.
Figure 15 shows an example of the aggregation of the values from the identified matching SII and ASI records of figure 14 according to embodiments of the present invention.
Figure 16 shows an example of the comparison of the aggregated values of figure 15 according embodiments of the present invention.
Figure 17 shows an example of a Reconciliation Item (RI) record generated according to embodiments of the present invention.
Figure 18 is a flowchart showing an exemplified method for performing reconciliation of accounts according to an embodiment of the present invention.
Figure 19 is a diagrammatic view of an exemplary computer system

### Modes for carrying out the invention

The present invention will be described with respect to particular embodiments and with reference to certain drawings but the scope of the invention is not limited thereto but only by the claims. The drawings described are schematic and are non-limiting. In the drawings, the size of some of the elements may be exaggerated and not drawn to scale for illustrative purposes. The dimensions and the relative dimensions do not necessarily correspond to actual reductions to practice of the invention.

Furthermore, the terms first, second, third and the like in the description and in the claims are used for distinguishing between similar elements and not necessarily for describing a sequential or chronological order. The terms are interchangeable under appropriate circumstances and the embodiments of the invention can operate in other sequences than those described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

Furthermore, the various embodiments, although referred to as "preferred" are to be construed as exemplary manners in which the invention may be implemented rather than as limiting the scope of the invention.

The term "comprising", used in the claims, should not be interpreted as being restricted to the elements or steps listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising A and B" should not be limited to devices consisting only of components A and B: rather, the only enumerated components of the device are A and B and other components may exist. Furthermore, the scope of the claim should be interpreted as including equivalents of those components.

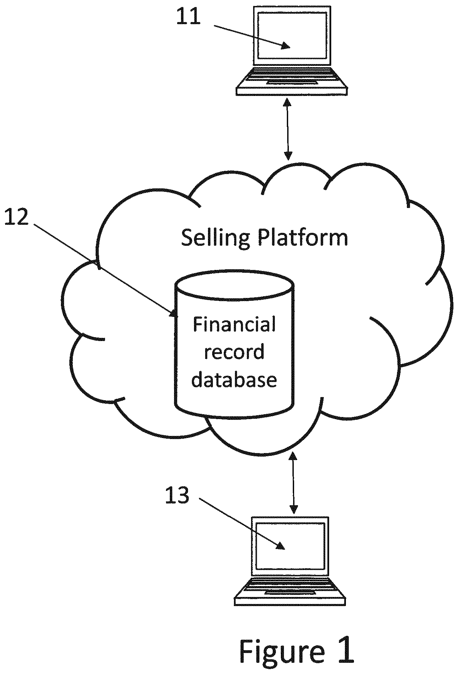

The present invention will be elucidated with references to the examples shown in figures 1 to 18.

The advancements in the internet technology have fundamentally altered the way commerce activities are conducted, such as the buying and selling of good and services. In today's connected world, the majority of the commercial transactions between a buyer and a supplier can be directly facilitated through online selling platforms. Online selling platforms may be used to connect a buyer with the products and services offered by at least one supplier and further facilitate any subsequent transactions, such as payment, issuing of invoices, etc.

Figure 1 shows an example of a selling platform configured for connecting a buyer 11 with the products offered for sale by at least one supplier 13. For example, the selling platform may be configured for facilitating the sale and purchase of travel related e.g. air tickets, hotel rooms, rental cars and the like. Through the selling platform, a buyer 11 e.g. a travel agent, may purchase a number of products from at least one supplier 13. For example, a travel agent 11 may book through the selling platform a number of hotel rooms from a hotel provider 13 for a given period. The selling platform may notify, once the purchase process is completed, the supplier 13 of the products purchased and further send a purchase confirmation to the buyer 11. The selling platform may be configured during the process of purchasing the products, for collecting and storing in a financial record database 12 raw sales information associated with the products purchased. For example, the selling platform may be configured for consolidating and storing the raw sales information associated with the products purchased into the financial record database 12 once the buyer 13 has confirmed the purchase.

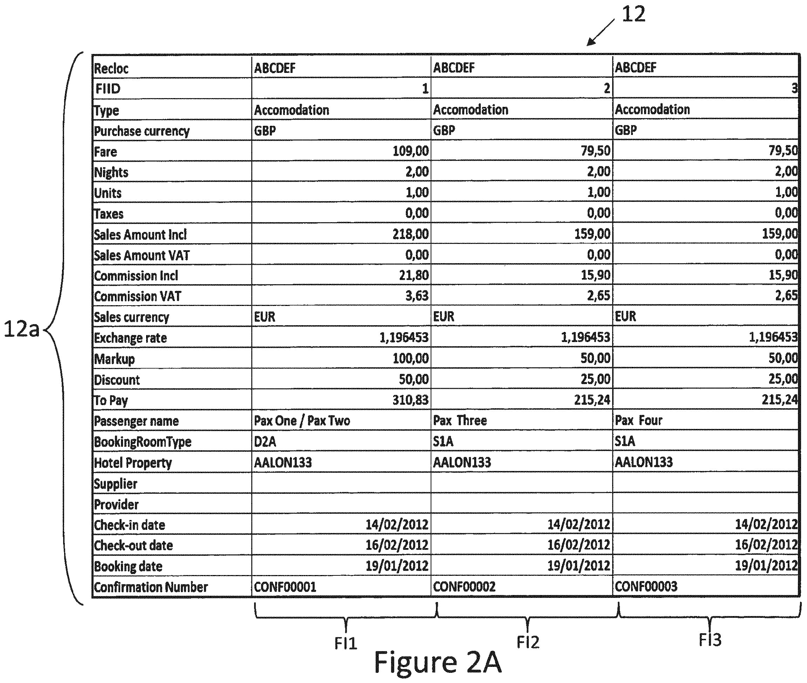

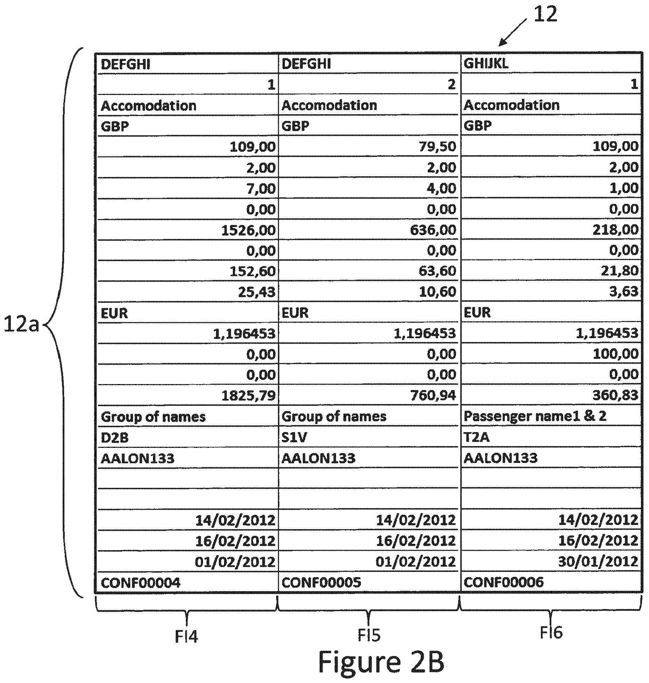

Figure 2 shows an example of raw sales information, stored in the financial record database 12, associated with the booking of a number of hotel rooms from a hotel provider. In the example of figure 2, the raw sales information associated with each product purchased is stored in the form of a database record FI1-6, referred to as Financial Item (FI) record, comprising a number of predetermined data fields 12a. Each of the FI record data fields may contain at least one data value determined from the raw sales information extracted from the purchased products. In the example of figure 2, the financial record database 12 comprises six FI records FI1-6, each comprising information related to a corresponding number of purchased products. The FI records FI1-6 may for example store different types of information associated with the purchased products in the corresponding data fields 12a. Some examples of information that may be stored in the FI data fields 12a may include: the type (of the product), the purchase currency, the fare, the passenger name, the booking type, the booking date, the check-in and check-out dates, the hotel property, the booking room type, the number of nights, the purchase and the sales currency, discount, the price to pay, the units, and so on. As shown in the example of figure 2, all financial records FI1-6 are of the same type "accommodation" and have been booked from the same Hotel Property "AALON133", while the fare and the price to pay may differ according to the Booking Room Type assigned and the number of units purchased. The financial record database 12 may be a relational database configured for storing the FI records FI1-6 in the form of at least one table containing a number of data fields 12a. The data fields 12a may be configured for storing data values entries in a predetermined format. The data fields 12a may further be labelled according to a predetermined labelling scheme.

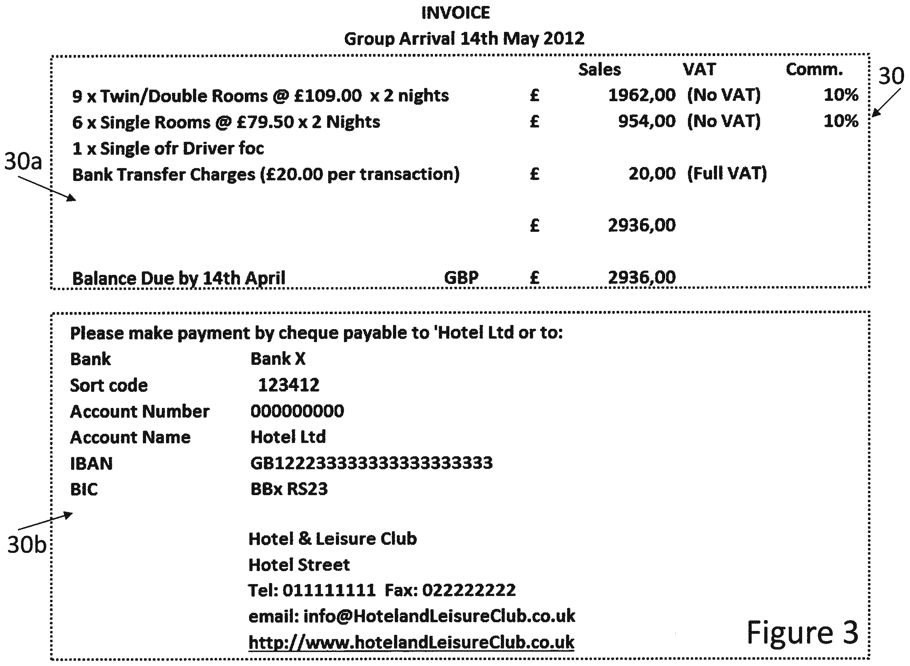

According to embodiments of the present invention, the supplier 13 may issue, once the purchase of the products has been confirmed, a supplier invoice data file 30. The supplier invoice data file 30 is forwarded to the buyer 11 for settlement either in electronic format e.g. in pdf, excel, XML, etc. via a communication link, such as an email exchange server - or as a physical copy via a postal service or similar. Figure 3, shows an example of a supplier invoice data file 30 issued for the products purchased from the selling network shown in figure 2. The supplier invoice 30 contains a variety of information such as the different products purchased, the price paid for each product, the commission to be paid, the due date of the balance, the name of the hotel provider issuing the invoice, the bank account and contact details of the hotel provider, and the like. The different information contained in the supplier invoice may be categorised into at least a first set of data 30a and a second set of data 30b. For example, the first set of data 30a may contain information related to the products purchased, also referred to as Supplier Invoice Items (SII), e.g. the quantity, the type, the sales price of each supplier item, the VAT to be paid, the commission to be paid, the balance due date and so on. The second set of data 30b may contain data associated with more generic information, also referred to as Supplier Item (SI), of the supplier invoice, such as the name of the supplier, the contact and bank details of the provider, and so on.

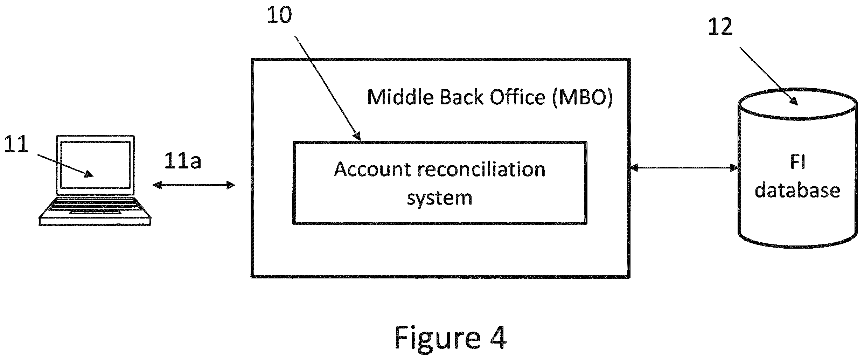

The buyer 11 once the supplier invoice data file 30 is received may access via a computer terminal an account reconciliation system 10 for processing and reconciling the supplier invoice data file 30 received. For example, as shown in figure 4, the buyer 11 may access via a communication link 11a a Middle Back Office system (MBO) provided with an account reconciliation system 10. Although the account reconciliation system 10 is shown in figure 4 as being part of a generic MBO system, e.g. in the form of a software module, it also may be provided as a standalone system that can be independently accessed by the user.

As shown in figure 4, the MBO system may be provided in direct communication with the FI database 12 of the selling platform. In this way, the account reconciliation system 10 may access and use the information stored in the FI records Fl1-6for reconciling the supplier invoice data file 30.

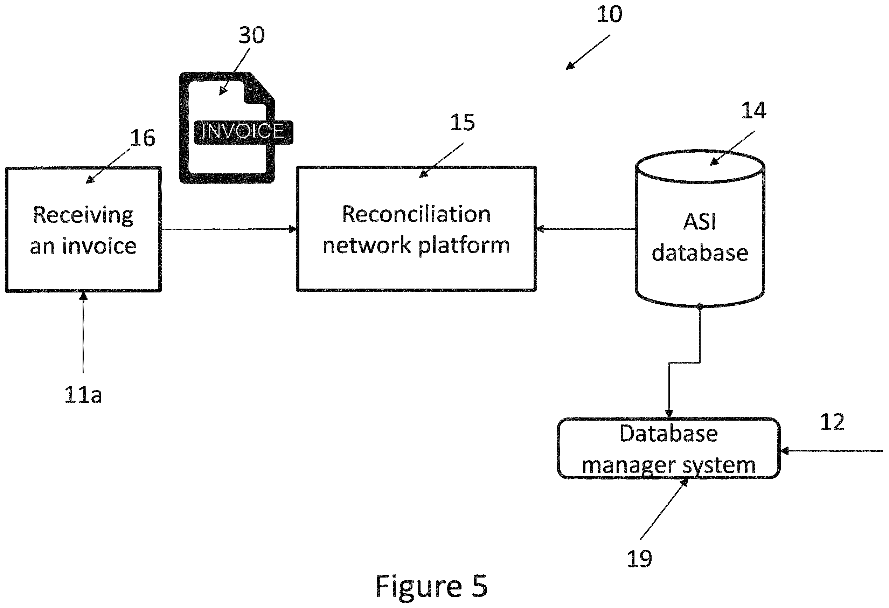

As shown in figure 5, the account reconciliation system 10 may comprise means for receiving an invoice data file 30. The supplier invoice data file 30 may be provided by the user via the communication link 11a. For example, the means 16 for receiving an invoice data file 30 may be provided with a user operated scanning system configured for converting a physical copy of the supplier data file 30 into an electronic format. In a further example, the means 16 for receiving a supplier invoice data file 30 may comprise a file uploader tool running on a computer device. The file uploader tool may be configured in response to a user request for retrieving a digital version of a supplier invoice data file e.g. pdf, excel, XML, or any other suitable format, from a local or remotely located database for processing by the account reconciliation system 10.

As shown in figure 5, the means 16 may transmit the supplier invoice data file 30 to a reconciliation network platform 15 configured for processing and reconciling the supplier invoice data file 30. The reconciliation network platform 15 may be provided in directed communication with an Actual Sales Item (ASI) database 14 comprising actual sales data extracted from the raw sales data stored in financial record database 12

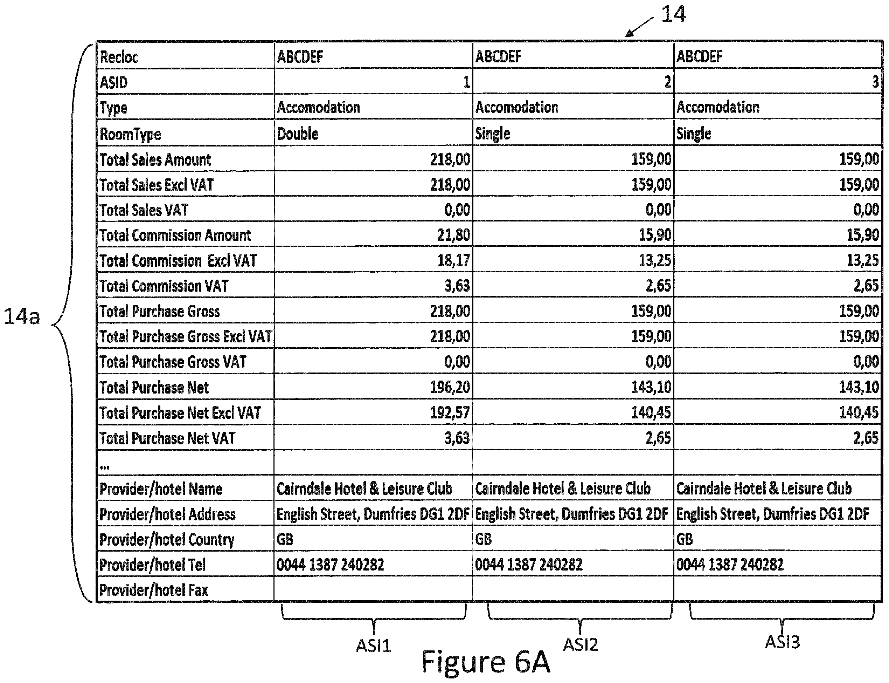

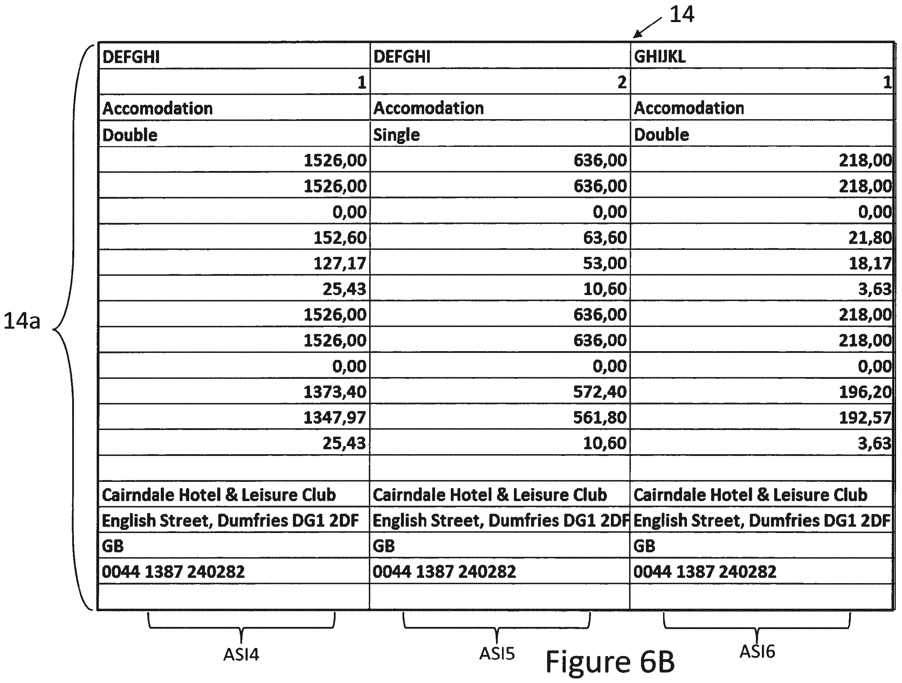

Figure 6 shows an example of actual sales item data stored in the Actual Sales Item (ASI) database 14. In the example illustrated, the actual sales data is stored in the form of at least one database record ASI 1-6, referred to as Actual Sales Item (ASI) record, containing a number of predetermined data fields 14a. Each ASI data field 14a may contain at least one data value extracted and/or determined from at least the raw sales data stored in the corresponding FI records FI1-6 of the FI database 12. In the example of figure 6, the ASI database 14 comprises six ASI records ASI 1-6, corresponding to the number of FI records FI1-6 stored in FI database 12, as shown in figure 2. The ASI records ASI1-6 may store information associated with the purchased products in corresponding data fields 14a. Some examples of information that may be stored in the ASI data fields 14a may include: the type (of the product), the room type (in the case of a hotel room), the sales amount, the total sales VAT, the total commission amount, the total purchase gross amount, the total purchase net amount, the provider/hotel name, the provider/hotel address, the provider/hotel country, and so on. As shown in the example of figure 6, the ASI data fields 14a may not necessarily correspond to the FI data fields 12a of the FI records FI1-6 shown in figure 2. Therefore, it might be necessary to determine the correspondence between the ASI data fields 14a and the FI data fields 12a. This may be performed by a database manager system 19, as shown in figure 5. The database manager system 19 may determine the correspondence between the ASI data fields 14a and FI data fields using a correspondence data field table. Additionally or alternatively, the database manager system 19 may determine the correspondence between the ASI data fields 14a and FI data fields using historical information collected during previous reconciliations. The database manager system 19 may be configured for extracting and/or determining the actual sales item data to be stored in the ASI database 14 from the FI data stored in the FI database 12. The database manager 19 may be configured for accessing the FI database 12 so as to retrieve at least a portion of the FI data stored in each of the FI records, FI1-6. The database manager 19 may be configured for generating the ASI records, ASI1-6, to be stored in the ASI database 14 by processing and transforming the FI data of the FI records, FI1-6, retrieved from the FI database 12, which may involve a number of data processing and data formatting actions to be taken. For example, the database manager 19 may be configured for extracting only a subset of the FI data contained in each FI record, FI1-6, which may be selected based on the ASI data fields 14a of the ASI table to be populated in the ASI database 14. Additionally and/or alternatively, the database manager 19 may be configured for converting the source data format of the extracted FI data subset to the destination data format of the ASI database 14, e.g. by converting currency amounts to a local currency, convert symbols to text or numbers, convert date and time values to the destination format, etc. In the examples illustrated in figures 2 and 6, the Hotel Property field listed in the FI data fields 12a as AALON133 is converted to Hotel & Leisure Club including the address, country and telephone number of the hotel. Moreover, the database manager system 19 may determine the value of ASI data fields 14a from already identified data. For example, the ASI data field 14a listed as "Total Purchase Net" may be determined by subtracting the value stored in the "Total Commission Amount" data field from the value stored in the "Total Sales Amount" data field. These details are put in the correct records of the ASI data fields 14a.

According to an embodiment of the present invention, the database manager 19 may be configured for harmonising the subset of the FI data extracted so as ensure compatibility with other data handled by the system 10, e.g. data stored in the supplier invoice database 21. In yet another non-limiting example, the database manager may be configured for labelling the subset of the FI data extracted according to the labelling scheme of the data stored in other system databases, such as the data stored in the supplier invoice database 21. In a further non-limiting example, the database manager 19 may be configured for enriching the subset of the FI data with meta-data extracted from a historical database 18, e.g. some of the data fields of the ASI record generated may be determined from the meta-data information stored in the historical database 18 e.g. room type data field. In the examples illustrated in figures 2 and 6, the FI record FI1 indicates that the FI data field listed as "BookingRoomType" has a value of "D2A", which is converted to a data value "Double" in the corresponding ASI1 data field 14a of the ASI record ASI1 listed as "RoomType".

Moreover, the database manager 19 may be configured for monitoring, either continuously or periodically, the FI database 12 to detect recent changes or updates made to the FI records FI 1-6 stored therein and according update the corresponding ASI records ASI 1-6 of the ASI database 14. For example, the database manager 19 may use an FI record version identifier, which may be stored together with the FI records FI1-6 in the FI database 12, for determining whether the version currently stored in the FI database 12 is the one used for generating the ASI records ASI1-6. In the case where the FI record version is not the same with the ASI version, then the database manager 19 may extract the portion of the FI records FI1-6 changed and accordingly update the corresponding portions of the ASI records ASI1-6.

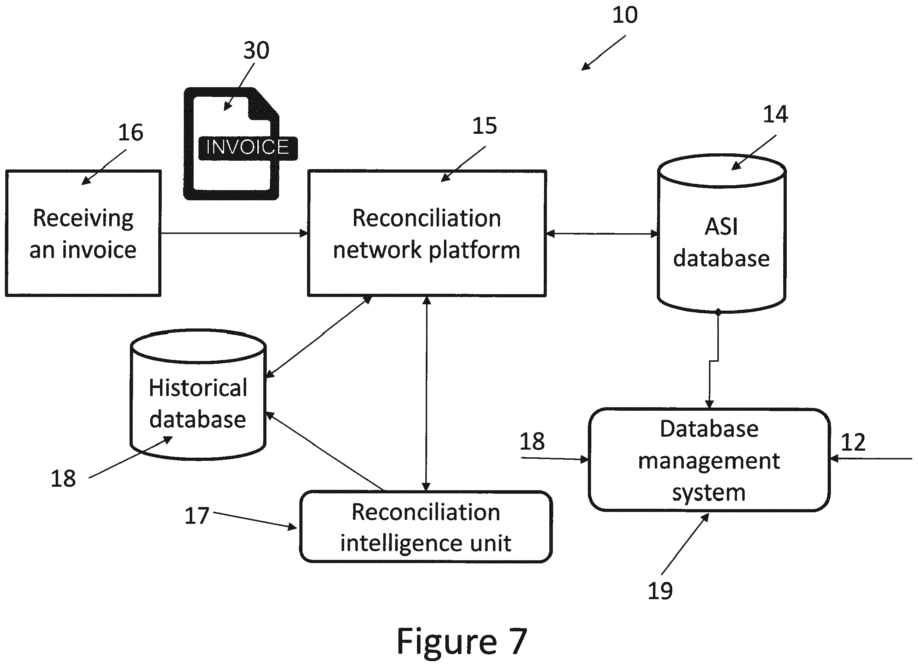

As shown in the figure 7, the account reconciliation system 10 may be provided with a reconciliation intelligence unit 17, which is configured for collecting meta-data during the processing and reconciliation of the supplier invoice data file. The meta-data collected may define how the data of previous supplier invoices was manipulated during the processing and reconciliation process, either by the components of the system 10 and/or by the user of the system 10 via a Graphic User Interface (GUI). Furthermore, the meta-data collected may define decisions taken by the user of the system with regards to the processing and reconciliation of each supplier invoice received. For example, meta-data records may be generated when a user consistently reconciles invoices despite a small amount difference with the corresponding actual sales data values. These records for example, may be used to automatically propose reconciliation of invoices that have been found to contain small amount differences with the corresponding actual sales data values. Additionally or alternatively, the system 10 may retrieve meta-data records stored in the historical database 18 to automatically determine how a received supplier invoice data file is to be processed and reconciled, based on lessons learnt from previously processed and reconciled supplier invoice data files, both manually and automatically by the system 10. A machine-learning feedback loop may be implemented by the reconciliation intelligence unit 17 to improve the accuracy of the system in reconciling the invoices.

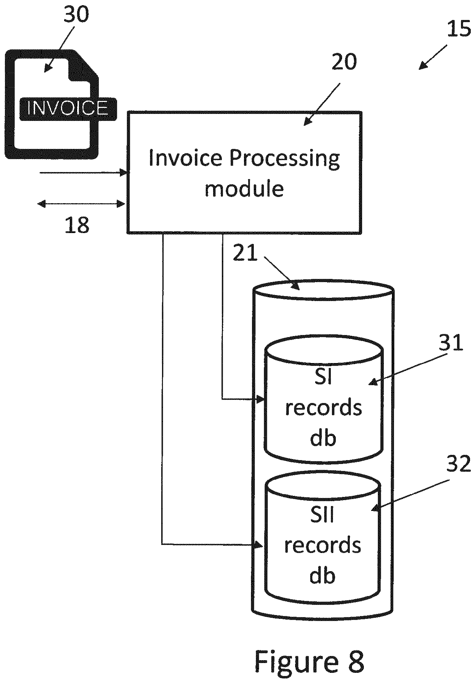

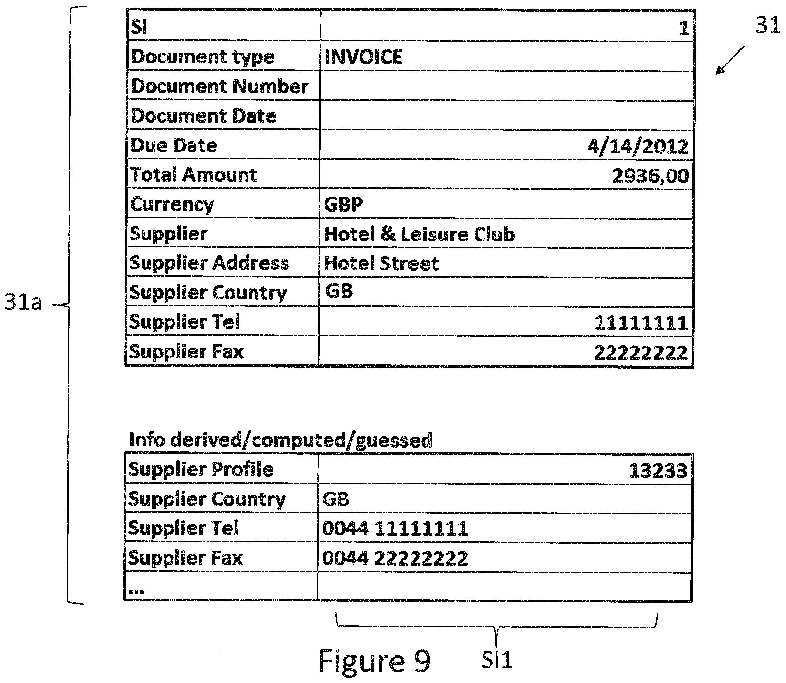

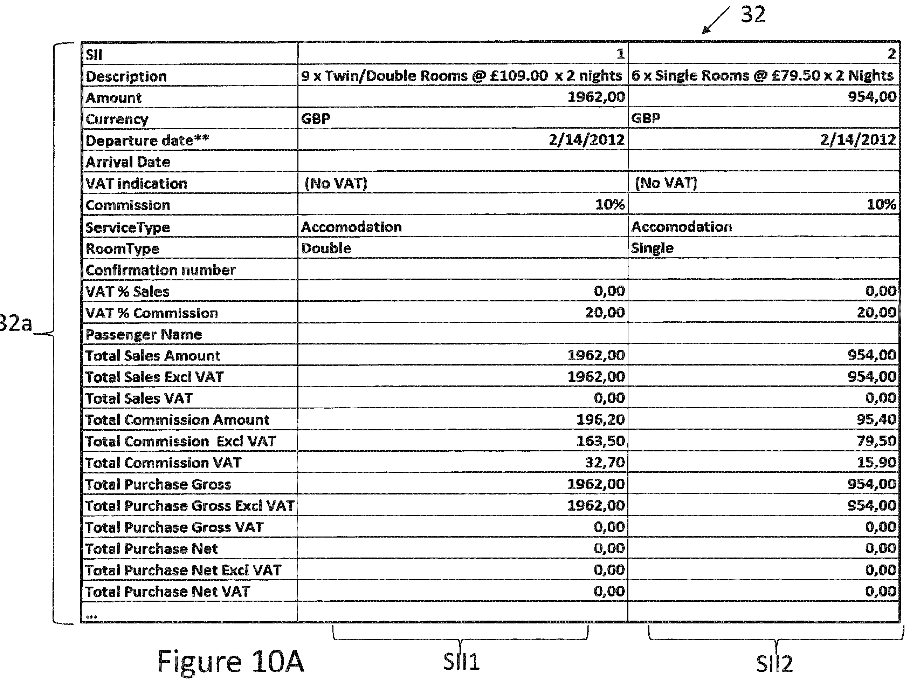

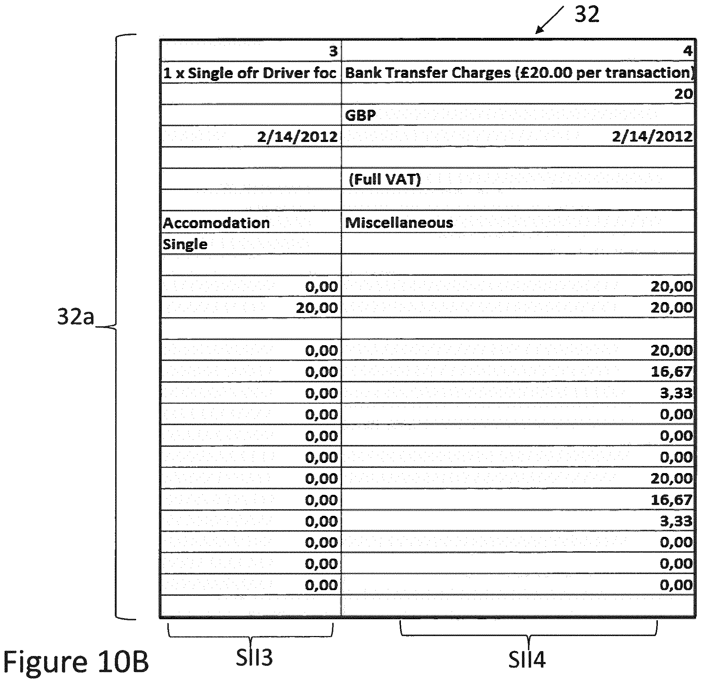

As shown in figure 8, the reconciliation network platform 15 may be provided with an invoice-processing module 20, which may be configured for processing the received supplier invoice data file 30 so as to extract the supplier invoice data. For example, the invoice processing module 20 may extract from the supplier invoice data file 30 the first and second set of supplier invoice data 30a and 30b. The invoice-processing module 20 may be configured for determining from the extracted first set of data 30a the Supplier Invoice Item (SII) data corresponding to each of the supplier items indicated in the invoice data file 30. The invoice processing module 20 may further extract from the second set of supplier invoice data 30b, the Supplier Invoice (SI) data corresponding to generic supplier invoice information as previously explained. The invoice processing module 20 may subsequently store the SI data and SII data extracted from the supplier invoice data file 30 into a first portion 32 and a second portion 31 of a supplier invoice database 21. As shown in figure 9, the SI data may be stored in the second database portion 31 the form of an SI record SI1 containing a number of SI data fields 31a, each containing a data value extracted from the supplier invoice shown in figure 3. Some examples of the information that may be stored in the SI data fields 31a may include: the document type, the currency, the supplier, supplier address and contact details, and so on. As shown in figure 10, the SII data may be stored in the first database portion 32 in the form of Supplier Invoice Item (SII), record SII1-4. In the example of figure 10, the first database portion 32 may contain four SII records, each SII record SII1-4 being stored in the form of an SII table comprising a set of SII data fields 32a, each configured for storing a SII data value extracted from the invoice data file 30 shown in figure 3. Some examples of the information that may be stored in the SII data fields 32a may include: SII number, the description of the supplier item extracted, the currency, the amount, the departure date, the service type, the commission, the room type, and so on. The Supplier Invoice Items (SII) data may include information that has been captured directly from the invoice, information derived from other information captured from the invoice, and information that is computed or "guessed" by the system 10, such as the price excluding tax (value-added tax, VAT), the commission amount for the booking entity and so on.

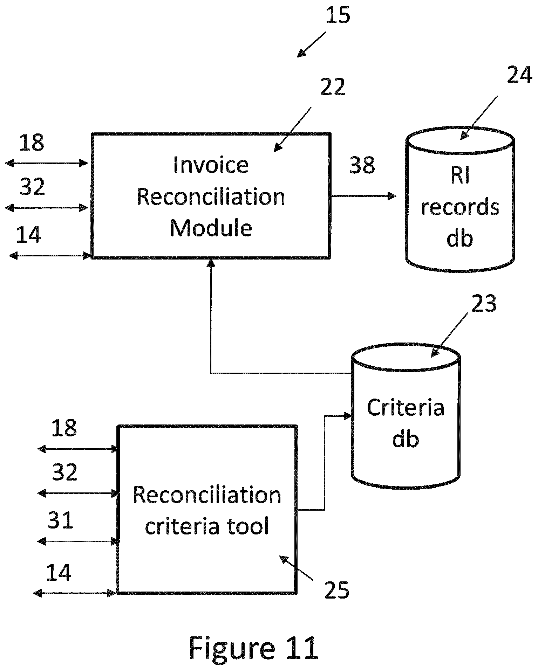

As shown in figure 11, the reconciliation platform may further be provided with a reconciliation module 22 configured for selecting, based on at least one Reconciliation Criterion (RC) that comprises at least one Reconciliation Value (RV), SII and ASI records for reconciliation with each other. The reconciliation criterion or criteria may be selected from a Reconciliation Criteria (RC) stored in a reconciliation criteria database 23. For example, the Reconciliation Criteria (RC) may be user selectable via a Graphic User Interface (GUI). The Reconciliation Criteria (RC) may be a set of fixed criteria, stored prior to the reconciliation by the user or the system administrator. Additionally or alternatively, the Reconciliation Criteria (RC) may be generated by a dedicated reconciliation criterion generation tool 25 based on a set of data fields selected from the SI and/or SIIs tables that correspond to data fields of the ASI table. Furthermore, the reconciliation criterion generation tool 25 may generate the reconciliation criteria from data fields that have been identified as being commonly designated fields in both the SI/SII tables and ASI tables. Some example of commonly designated data fields may include: room type, provider/hotel, check-in date, and so on. Moreover, the reconciliation criteria generation tool 25 may generate a list of reconciliation criteria based on historical information stored in the historical system database 18 collected from previous reconciliation processes. Alternatively, the reconciliation module 22 may select the corresponding SII and ASI records for reconciliation by simply going hierarchically through the data fields 14a and 31a of each database 14 and 31 and comparing the resulting values to identify matching SII and ASI records SII1-4 and ASI1-6.

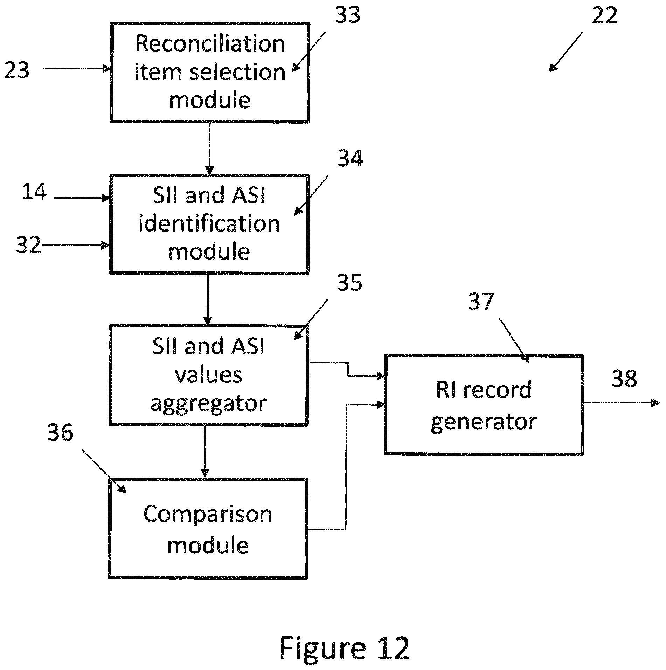

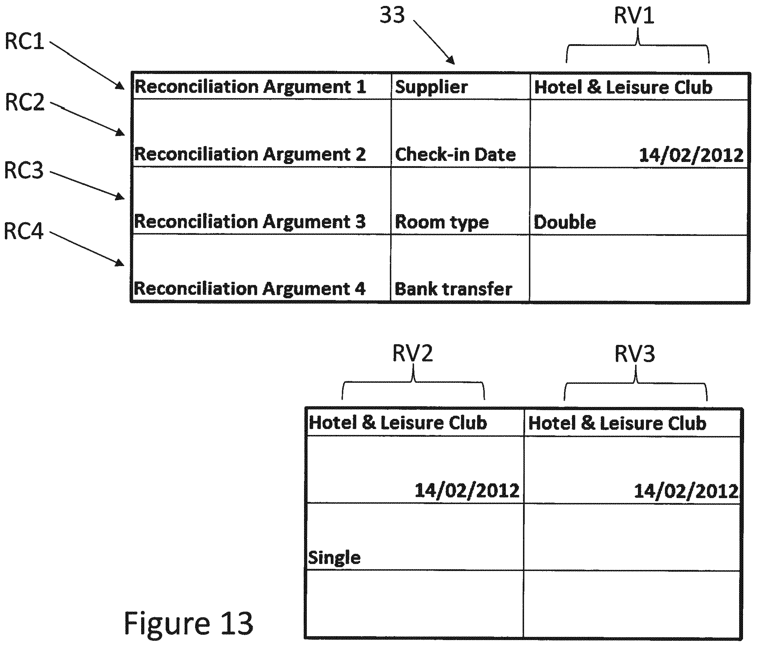

As shown in figure 12, the reconciliation module 22 may be provided with a Reconciliation item selection module 33 configured for selecting the Reconciliation Criteria (RC) for identifying the matching SII and ASI records for reconciliation. An example of a set of reconciliation criteria, RC1-3, that may be used by the Reconciliation item selection module 33, is shown in figure 13. In the example illustrated, three Reconciliation Criteria, RC1-3, have been selected e.g. supplier, Check-in date and room type, each containing three Reconciliation Values RV1-3.

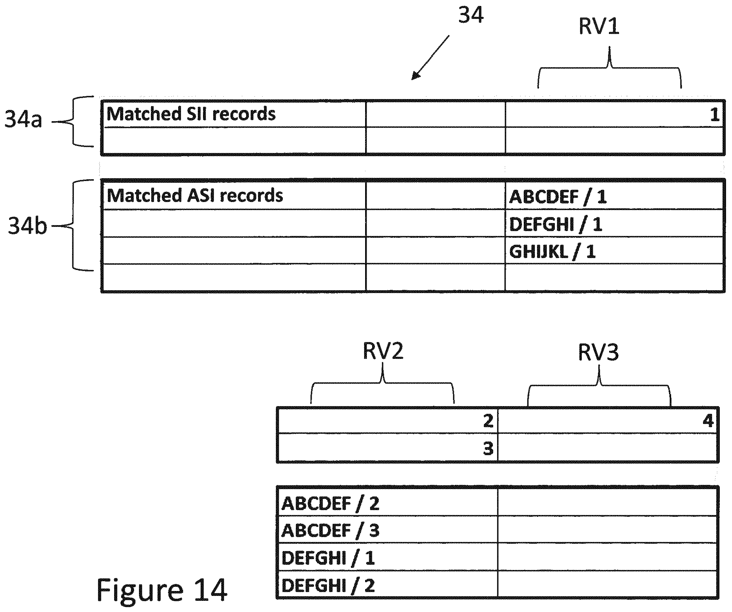

The reconciliation module 22 may be provided with an SII and ASI identification module 34 configured for identifying and selecting, based on the selected Reconciliation Criteria RC1-3, SII and ASI records, SII1-3 and ASI1-6, for reconciliation. The SII and ASI identification module 34 may be configured for selecting the SII and ASI records, SII1-3 and ASI1-, for reconciliation by comparing the at least one Reconciliation Value RV1-3 against the values stored in the set of SII data fields 32a and ASI data fields 14a to find matching SII and ASI records SII1-3 and ASI1-6. The SII and ASI identification module 34 may be configured for aggregating the identified matched SII and ASI records for each one of the reconciliation criteria values RV1-3 selected, as shown in figure 14. In the example illustrated, for the first combination of reconciliation criteria values RV1, the SII and ASI identification module 34 identified one matched SII record, listed as "1" and corresponding to SII1 record from the SII database 32 of figure 10, and three corresponding ASI records listed as "ABCDEF/1, DEFGHI/1 and GHIJKL/1" corresponding to ASI1, ASI4 and ASI6 from the ASI database 14 figure 6, all having an FIID data field 14a value of "1". In the same example, for the third combination of Reconciliation criteria values RV3, the SII and ASI identification module 34 identified one matched SII record listed as "4" and corresponding to SI4 record from the SII database 32 of figure 10 but no corresponding ASI records from the ASI database 14.

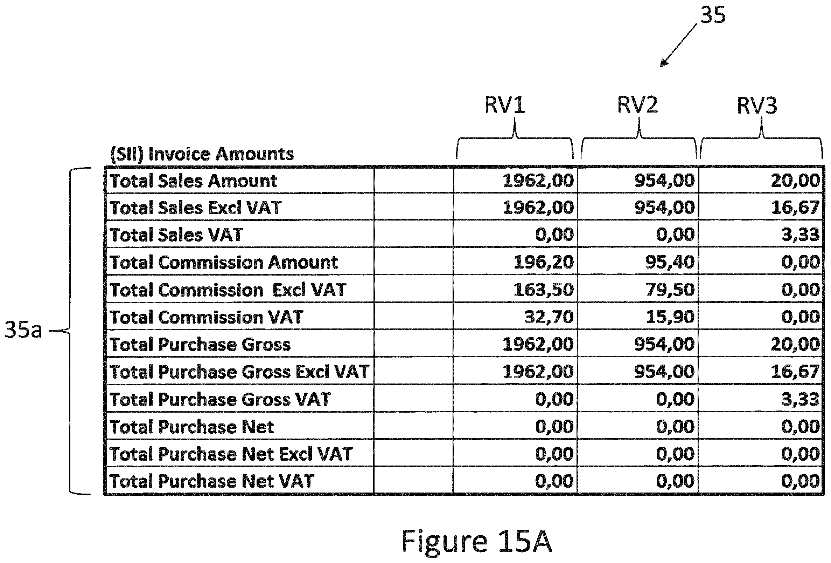

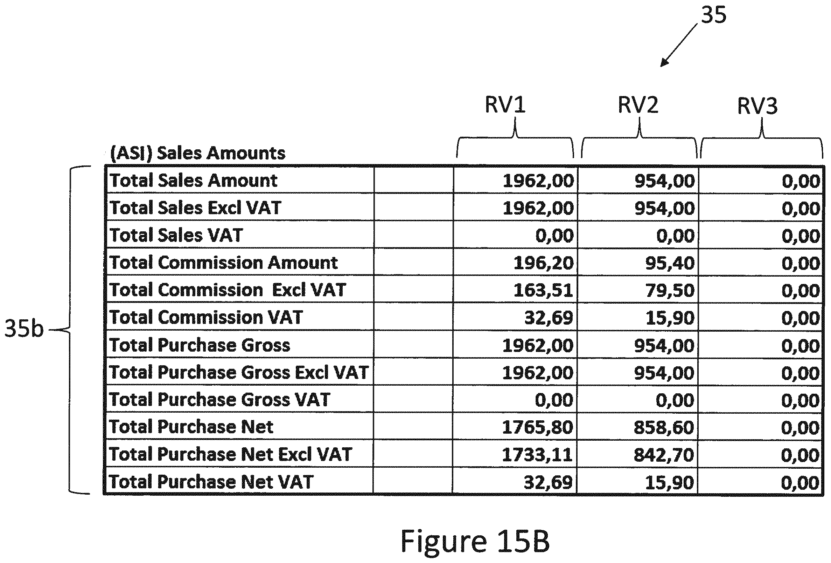

As shown in figure 12, the reconciliation module 22 may be provided with an SII and ASI values aggregator module 35 configured for aggregating and storing, for each one of the reconciliation criteria values RV1-3 selected, the values contained in the data fields of the matching SII and ASI records SII1-4 and ASI1-6 identified by the SII and ASI identification module 34. The aggregated values may be stored into respectively a set of corresponding SII Reconciliation (SIIR) data fields 35a and ASI Reconciliation (ASIR) data fields 35b of a Reconciliation Item (RI) record 38, as shown in figure 15. Reconciliation Item (RI) record 38, may be generated by a RI record generator module 37 of the reconciliation module 22, as shown in figure 12. In the illustrated example of figure 15, for RV1 the values of the identified matched SII (SI1) and ASI records (ASI1, ASI4 and ASI6), shown in figure 14, are aggregated into the corresponding SIIR and ASIR data fields 35a and 35b.

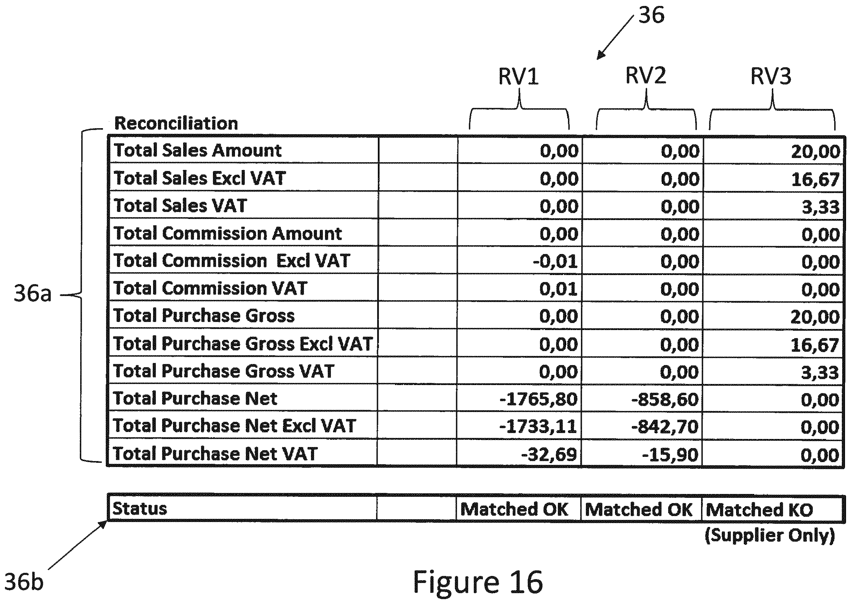

The aggregated values for the identified SII and ASI records may then be compared to determine any differences in the amounts quoted. For example, the reconciliation module 22 may be provided with a comparison module 36 for comparing the aggregated SII and ASI values of the identified matched SII and ASI records. As shown in figure 16, the results of the comparison may be stored in a set of reconciliation data fields 36a of the at least one RI record 38. Based on the comparison results, the status of the reconciliation may be also be extracted, which indicates whether the reconciliation was successful (OK) or not successful (KO). The status of the reconciliation is stored in corresponding reconciliation status fields 36b of the RI record 38, as shown in figure 16. In the illustrated example of figure 16, for the Reconciliation Value RV1 the comparison between the aggregated values yield no differences, e.g. Total sales amount is set to "0", resulting in a successful reconciliation indicated by the reconciliation status 36b "matched OK". On the on the other hand, for the Reconciliation Value RV3, the comparison yield a difference in the total sales amount of "20.00", resulting in an unsuccessful reconciliation indicated by the reconciliation status 36b "matched KO".

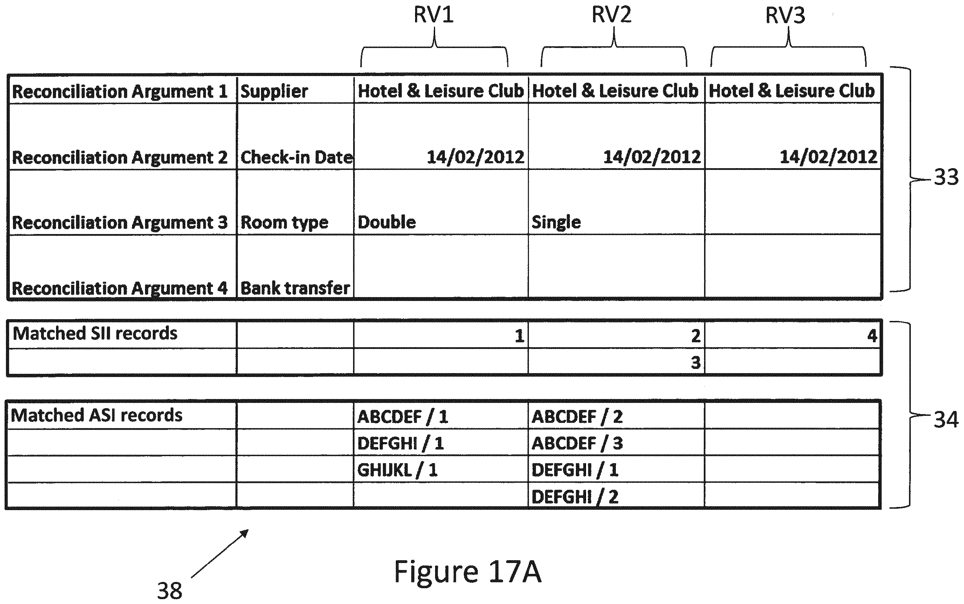

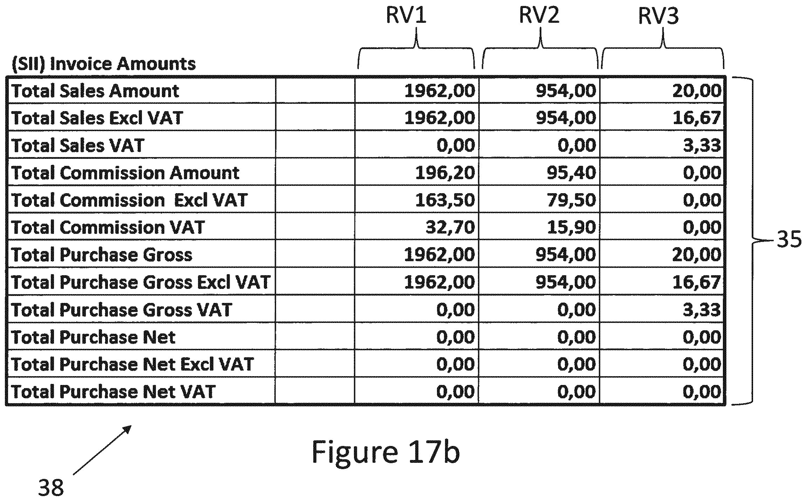

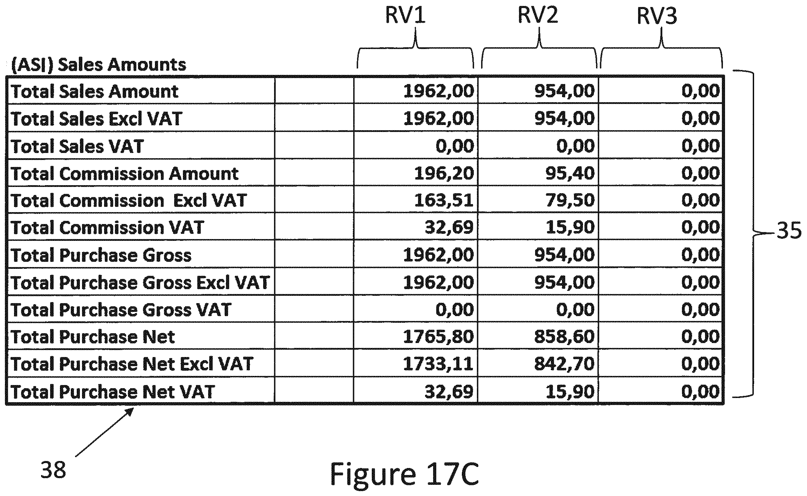

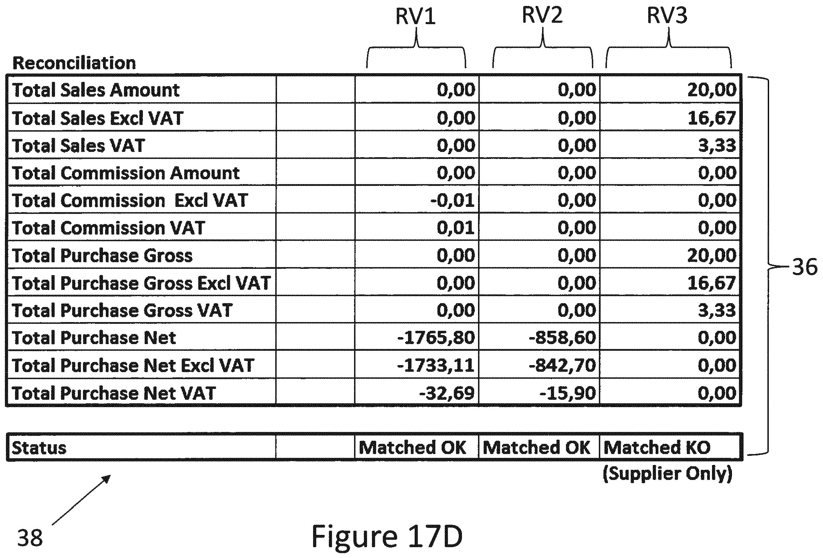

Figure 17 shows an example of Reconciliation Item (RI) record 38 to be stored in the reconciliation record database 24.

According to embodiments of the present invention, the account reconciliation system 10 of the present invention may generate based on the results or status of the reconciliation a number of follow-up actions. For example, the system of the present invention 10 may propose to the user, after a successful reconciliation, a number of follow-up actions to a Graphic User Interface of a user terminal. The follow-up actions may include: reject invoice, accept invoice, report invoice, commission tracking, and bill back. Providing the user with a number of follow up actions, which have been determined based on the results of the reconciliation, greatly simplifies the reconciliation process and further reduces the skill of the user required for performing the reconciliation and follow up of the supplier invoices. This overcomes the problems with traditional reconciliation procedures, where the reconciliation follow-up actions need to be manually determined by the user and executed using separate system modules, thus increasing the complexity and time required for completing the reconciliation process.

The system 10 of the present invention may further be provided with an invoice generation tool configured for generating a supplier invoice, also referred to as "volatile" invoice directly from the ASI records stored in the actual sales database 14. The "volatile" invoice may be presented to the user for editing and further processing without the need for manually inputting an separate invoice file into the system, which greatly simplifying the processing of a supplier invoice for reconciliation. In this way, it is possible to easily compare the "volatile" supplier invoice with the invoice received, thus greatly improving the speed and accuracy of the reconciliation process. The security of the reconciliation may further be enhanced with the generation of "volatile" invoices, since only invoices from trusted suppler can be generated from the ASI database for reconciliation. Furthermore, a "volatile" may be used for supplementing or replacing poor quality invoices received for reconciliation. For example, in the case of receiving a low quality supplier invoice containing insufficient level of information for performing the reconciliation, the user may generate a "volatile" invoice so as supplement the missing information thus allowing for the reconciliation process to resume without having to request additional information from the supplier issuing the invoice or rejecting the invoice. Furthermore, in some cases the user may decide to generate a supplier invoice for items purchased before the actual invoice is issued by the supplier. For example, for fiscal purposes, the user may desire to pay all outstanding purchases made during the fiscal year before the filing of the financial report with the tax authorities.

According to embodiments of the present invention, the system 10 may be configured for optimising the way data is stored and retrieved from the different databases, so as to improve the efficiency of the computing hardware resources used for the implementation of the system. Optimising the storing of data may significantly reduce the memory access time, read/write database operations, computing power, network load traffic. For example, the optimisation of the system hardware resources may be achieved by providing a "key" value representation of all data fields of the respective databases, which may be stored in the form of a key-value table. The key-value table may contain a collection of records containing data, each uniquely identified by a "key" value. Thus, with the use of "key" values, the search for matching records can be performed at a higher level, thus significantly reducing query response times and computing power required. Additionally or alternatively, the system hardware resources may be optimised by de-normalizing the respective system databases, and/or by indexing the columns of the SII and ASI tables stored therein for well-known data fields based on meta-data information extracted from the historical database. For example, the table indexes may be provided on most common combinations of data fields representing the matching criteria for identifying matching SII and ASI records from the respective system databases. The most common combinations of data fields may be determined either directly by the user or based on the historical information stored in the historical database. The denormalisation of the system databases may involve adding redundant copies of data or by grouping data, leading to an increase read performance of the database, leading to a significant improvement in the query response time.

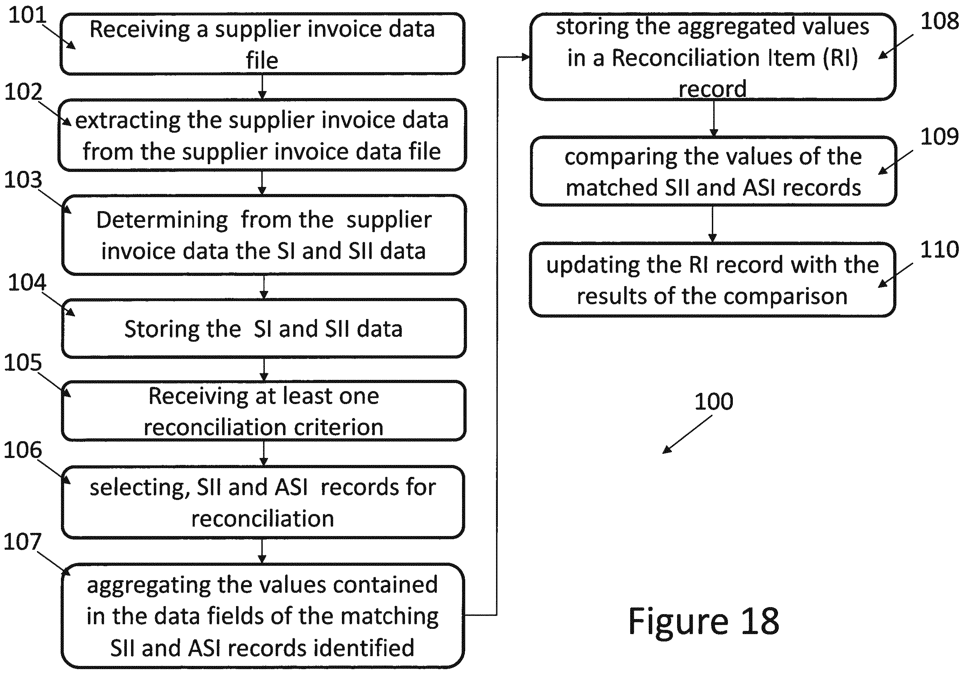

According to embodiments of the present invention a computer implemented method 100 may be provided for performing reconciliation of accounts over a computer network, as shown in figure 18. More specifically, the method may be provided with a number of steps. The method may start at step 101 by receiving a supplier invoice data file 30, e.g. by means 16 for receiving an invoice data file 30, comprising at least a first set of invoice data 30a comprising information on the supplier items purchased from the supplier. An actual sales database 14 may be provided comprising at least one Actual Sales Item, ASI, record ASI1-6 comprising actual sales data for supplier items purchased from at least one supplier, the at least one ASI record ASI1-6 being stored in the form of an ASI table comprising a number of ASI data fields 14a, each configured for storing an ASI data value in a predetermined data format. Once the supplier invoice data file 30 is received, the reconciliation of the invoice may start by reconciling the supplier items indicated in the supplier invoice data file 30 with corresponding ASIs ASI1-6 retrieved from the actual sales database 14. The reconciliation of the supplier invoice may process in an invoice-processing module 20 the received supplier invoice data file 30 so as to extract at least a first set of invoice data 30a, as indicated in step 102. The method continues in step 104 by determining from the extracted at least a first set of invoice data 30a, Supplier Invoice Item, SII, data corresponding to each of the supplier items indicated in the invoice data file 30. In step 104, the method may store in a first portion 31 of a supplier invoice database 21 each extracted SII data in the form of a Supplier Invoice Item, SII, record SII1-4. Each SII record SII1-4 being stored in the form of an SII table comprising a set of SII data fields 32a, each configured for storing an SII data value in a predetermined data format, and the extracting the supplier invoice data from the supplier invoice data file 30. In the step 105, a reconciliation criterion, RC1-3, is received comprising at least one value, RV1-3. Based on the at least one reconciliation criterion, RC1-3, the method selects at step 106, Slls and ASIs for reconciliation. The step 106 may further comprise the step of comparing the at least one reconciliation value, RV1-3, against the values stored in the set of SII fields, 32a, and ASI fields, 14a, of respectively the SII and ASI tables to find matching SII and ASI records. For each reconciliation value, RV1-3, the step of reconciling may further comprise the steps of: aggregating the values contained in the data fields of the matching identified SII and ASI records, as indicated in step 107, and of storing the aggregated values of the matching SII and ASI records into respectively a set of corresponding SII Reconciliation (SIIR) fields and a set of ASI Reconciliation (ASIR) fields of a Reconciliation Item (RI) record, as indicated in step 108. The values stored in the SIIR fields are compared with the values stored in the corresponding ASIR fields of the RI record so as to identify any differences, as indicated in step 109, and RI record is updated with the results of the comparison in step 110.

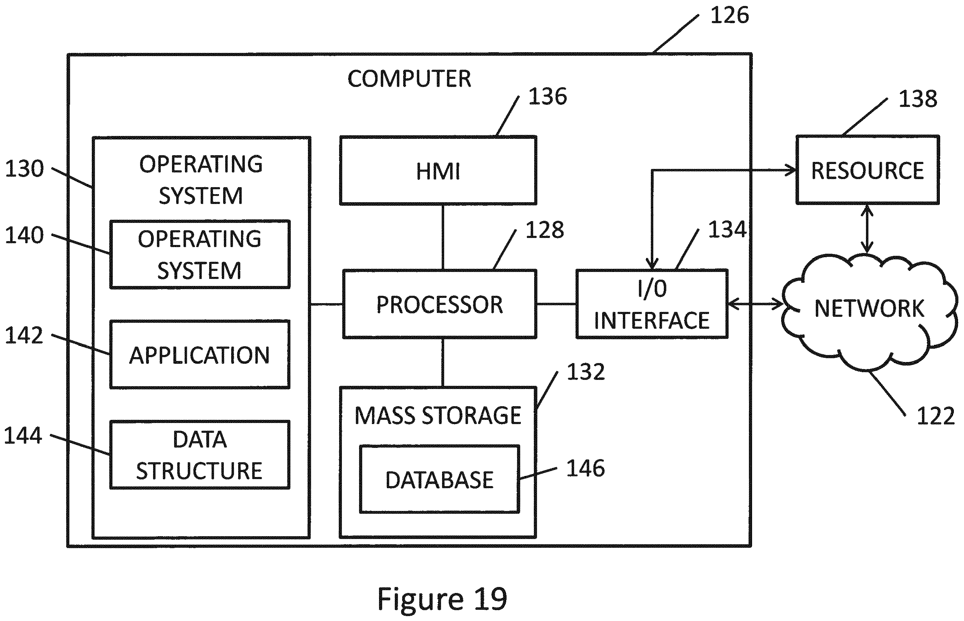

Referring now to Figure 19, the platforms, modules, units, etc. described herein may be implemented on one or more computing devices or systems, such as exemplary computer system 126. The computer system 126 may include a processor 128, a memory 130, a mass storage memory device 132, an input/output (I/O) interface 134, and a Human Machine Interface (HMI) 136. The computer system 126 may also be operatively coupled to one or more external resources 138 via the network 122 or I/O interface 134. External resources may include, but are not limited to, servers, databases, mass storage devices, peripheral devices, cloud-based network services, or any other suitable computer resource that may be used by the computer system 126.

The processor 128 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 130. Memory 130 may include a single memory device or a plurality of memory devices including, but not limited, to read-only memory (ROM), random access memory (RAM), volatile memory, non-volatile memory, static random access memory (SRAM), dynamic random access memory (DRAM), flash memory, cache memory, or any other device capable of storing information. The mass storage memory device 132 may include data storage devices such as a hard drive, optical drive, tape drive, non-volatile solid state device, or any other device capable of storing information.

Processor 128 may operate under the control of an operating system 140 that resides in memory 130. The operating system 140 may manage computer resources so that computer program code embodied as one or more computer software applications, such as an application 142 residing in memory 130, may have instructions executed by the processor 128. In an alternative embodiment, the processor 128 may execute the application 142 directly, in which case the operating system 140 may be omitted. One or more data structures 144 may also reside in memory 130, and may be used by the processor 128, operating system 140, or application 142 to store or manipulate data.

The I/O interface 134 may provide a machine interface that operatively couples the processor 128 to other devices and systems, such as the network 122 or external resource 138. The application 142 may thereby work cooperatively with the network 22 or external resource 138 by communicating via the I/O interface 134 to provide the various features, functions, applications, processes, or modules comprising embodiments of the invention. The application 142 may also have program code that is executed by one or more external resources 138, or otherwise rely on functions or signals provided by other system or network components external to the computer system 126. Indeed, given the nearly endless hardware and software configurations possible, persons having ordinary skill in the art will understand that embodiments of the invention may include applications that are located externally to the computer system 126, distributed among multiple computers or other external resources 138, or provided by computing resources (hardware and software) that are provided as a service over the network 122, such as a cloud computing service.

The HMI 136 may be operatively coupled to the processor 128 of computer system 126 in a known manner to allow a user to interact directly with the computer system 126. The HMI 136 may include video or alphanumeric displays, a touch screen, a speaker, and any other suitable audio and visual indicators capable of providing data to the user. The HMI 136 may also include input devices and controls such as an alphanumeric keyboard, a pointing device, keypads, pushbuttons, control knobs, microphones, etc., capable of accepting commands or input from the user and transmitting the entered input to the processor 128.

A database 146 may reside on the mass storage memory device 132, and may be used to collect and organize data used by the various systems and modules described herein. The database 146 may include data and supporting data structures that store and organize the data. In particular, the database 146 may be arranged with any database organization or structure including, but not limited to, a relational database, a hierarchical database, a network database, or combinations thereof. A database management system in the form of a computer software application executing as instructions on the processor 128 may be used to access the information or data stored in records of the database 146 in response to a query, where a query may be dynamically determined and executed by the operating system 140, other applications 142, or one or more modules.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g.,, operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g.,, radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A system (10) for performing reconciliation of accounts over a computer network, the system comprising:
means (16) for receiving a supplier invoice data file (30) comprising at least a first set of invoice data (30a) comprising information on the supplier items purchased from the supplier;
an actual sales database (14) comprising at least one Actual Sales Item, ASI, record (ASI1-6) comprising actual sales data for supplier items purchased from at least one supplier, the at least one ASI record (ASI1-6) being stored in the form of an ASI table comprising a number of ASI data fields (14a), each configured for storing an ASI data value in a predetermined data format; and
a reconciliation network platform (15) operative with the means (16) for receiving the supplier invoice data file (30) and with the actual sales database (14) for reconciling the supplier items indicated in the supplier invoice data file (30) with corresponding ASI records (ASI1-6) retrieved from the actual sales database (14),
wherein the reconciliation network platform (15) comprises
an invoice-processing module (20) configured for processing the received supplier invoice data file (30) so as to extract at least the first set of invoice data (30a),
for determining from the first set of invoice data (30a) Supplier Invoice Item, SII, data corresponding to each of the supplier items indicated in the invoice data file (30), and
storing in a first portion (31) of a supplier invoice database (21) each extracted SII data in the form of a Supplier Invoice Item, SII, record (SII1-4), each SII record (SII1-4) being stored in the form of an SII table comprising a set of SII data fields (32a), each configured for storing a SII data value in a predetermined data format, and
an invoice reconciliation module (22) configured for selecting for reconciliation, based on at least one reconciliation criterion (RC1-3) comprising at least one reconciliation value (RV1-3), at least one SII record (SII1-4) from the supplier invoice database (21) and at least one corresponding ASI (ASI1-6) record from the actual sales database (14), wherein invoice reconciliation module (22) is configured for selecting the SII and ASI records for reconciliation by comparing the values of each reconciliation criterion (RC1-3) against the data values stored in the set of SII data fields (32a) and corresponding ASI data fields (14a) of respectively the SII and ASI tables to identify matching SII records (SII1-4) and corresponding matching ASI records (ASI1-6),
wherein, for each reconciliation value or each combination of reconciliation values (RV1-3), the invoice reconciliation module (22) is configured for aggregating and storing the values retrieved from the data fields (14a,32a) of the identified matching SII and ASI records (SII1-4, ASI1-6) into respectively a set of corresponding SII Reconciliation, SIIR, data fields (35a) and a set of ASI Reconciliation, ASIR, data fields (35b) of at least one Reconciliation Item (RI) record (38), the Reconciliation Item record being stored in a Reconciliation record database (24) in the form of at least one Reconciliation Item, RI, table,
the reconciliation module being further configured for reconciling the identified matched SII records (SII1-4) with the corresponding matched ASI records (ASI1-6) by comparing the values stored in the SIIR fields (35a) with the values stored in the corresponding ASIR fields (35b) of the at least one RI record (38) so as to identify any differences, and storing the values of the comparison in a set of reconciliation data fields (36a) of the at least one RI record (38), and for updating the RI record (38) with a reconciliation status (36b) indicating the status of the reconciliation.

2. A system (10) according to claim 1, wherein the invoice processing module (20) is configured for determining from the extracted supplier invoice data a second set of data (30b) comprising generic Supplier Invoice (SI) data comprising information for identifying the supplier of the invoice, and wherein the invoice processing module (20) is configured for storing at least a portion of the second data (30b) in a second portion (32) of the supplier invoice database (21) in the form of a Supplier Invoice (SI) record (SI1) in a SI table comprising a set of SI data fields (31a).

3. A system (10) according to claim 2, wherein the reconciliation module (22) is configured for selecting the SIIs and ASIs (SII1-4, ASI1-6) for reconciliation based on the combination of a plurality of reconciliation criteria (RC1-3).

4. A system (10) according to claim 3, wherein the reconciliation network platform (15) comprises a reconciliation criterion generation tool (25) configured for generating the plurality of reconciliation criteria (RC1-3) from a set of data fields (32a, 31a) selected from the SI and/or SIIs tables that correspond to data fields (14a) of the ASI table.

5. A system (10) according to any one of the preceding claims, wherein the reconciliation network platform (15) is configured for generating, based on the results of the reconciliation, a number of follow-up actions on a Graphic User Interface of a user terminal (11) selected from the group consisting of at least: reject or accept the supplier invoice, report invoice, track commission, and bill back.

6. A system (10) according to any one of the preceding claims, wherein the reconciliation network platform (15) comprises a reconciliation intelligence unit (17) arranged for collecting supplier invoice meta-data corresponding to actions taken and modifications made to the data during the processing and reconciliation of the supplier invoice data file.

7. A system (10) according to claim 6, wherein the reconciliation intelligence unit (17) is configured for storing the supplier invoice meta-data in a historical server database (18).

8. A system (10) according to claim 7, wherein the invoice-processing module (20) is configured for enriching the SI and SII records (SI1, SII1-4) stored in the supplier invoice database (21) with meta-data retrieved from the historical database (18).

9. A system (10) according to any one of the preceding claims, wherein the system (10) is in direct communication with a sales network platform comprising a Financial Item (FI) database (12) containing a number of FI records (FI1-6) each comprising Financial Item, FI, data related to actual sales information recorded at the time of purchase of each supplier item.

10. A system (10) according to claim 9, wherein the system (10) comprises a database manager (19) configured for processing and transforming the FI records (FI1-6) of the FI database (12) so as to generate corresponding ASI records (ASI1-6) to be stored in the actual sales database (14).

11. A system (10) according to claim 10, wherein the database manager (19) is configured for performing at least one of:
extracting a subset of the FI data corresponding to the ASI data fields (14a) of the ASI table to be populated;
converting the format of the subset of FI data extracted into the data format of the actual sales database (14), preferably converting amounts to a local currency;
harmonising the subset of the FI data extracted with the data stored in the SII data fields (32a) of the supplier invoice database (21);
labelling the subset of the FI data extracted according to the labelling scheme of the SII data fields of the supplier invoice database (21).
enriching the subset of the FI data with meta-data extracted from the historical database (18).

12. A system (10) according to claims 10 or 11, wherein the database manager (19) is configured for monitoring the status of the FI data stored in the FI database (12) for any changes and accordingly updating the corresponding ASI records (ASI1-6) stored in the actual sales database (14).

13. A system (10) according to any one of the preceding claims, wherein the system comprises an invoice generation tool configured for generating a supplier invoice directly from data stored in the ASI records (ASI1-6) stored in the actual sales database (14).

14. A system (10) according to any one of the preceding claims, wherein the invoice processing module (20), the reconciliation module (22) and the database manager (19) are configured for manipulating the data to be stored in in the respective databases (14, 21, 24) by assigning key values to generic table data fields, de-normalizing the respective database, and indexing the columns of the tables for well-known data fields based on meta-data extracted from the historical database (18).

15. A computer implemented method (100) for performing reconciliation of accounts over a computer network, the method comprising the steps of:
receiving by means (16) a supplier invoice data file (30) comprising at least a first set of invoice data (30a) comprising information on the supplier items purchased from the supplier;
providing an actual sales database (14) comprising at least one Actual Sales Item, ASI, record (ASI1-6) comprising actual sales data for supplier items purchased from at least one supplier, the at least one ASI record (ASI1-6) being stored in the form of an ASI table comprising a number of ASI data fields (14a), each configured for storing an ASI data value in a predetermined data format; and
reconciling the supplier items indicated in the supplier invoice data file (30) with corresponding ASIs (ASI1-6) retrieved from the actual sales database (14),
wherein the step of reconciling comprises the steps of:
processing in an invoice-processing module (20) the received supplier invoice data file (30) so as to extract at least the first set of invoice data (30a),
determining by the invoice-processing module (20) from the first set of invoice data (30a) Supplier Invoice Item, SII, data corresponding to each of the supplier items indicated in the invoice data file (30),
storing in a first portion (31) of a supplier invoice database (21) each extracted SII data in the form of a Supplier Invoice Item, SII, record (SII1-4), each SII record (SII1-4) being stored in the form of an SII table comprising a set of SII data fields (32a), each configured for storing an SII data value in a predetermined data format, and the extracting the supplier invoice data from the supplier invoice data file (30),
selecting by means of an invoice reconciliation module (22), based on at least one reconciliation criterion (RC1-3) comprising at least one reconciliation value (RV1-3), at least one SII record (SII1-4) from the SII database (21) and at least one corresponding ASI (ASI1-6) record from the actual sales database (14),
wherein the step of selecting the SII and ASI records for reconciliation comprises the step of comparing the values of each reconciliation criterion (RC1-3) against the data values stored in the set of SII data fields (32a) and corresponding ASI data fields (14a) of respectively the SII and ASI tables to identify matching SII records (SII1-4) and corresponding matching ASI records (ASI1-6),
wherein, for each reconciliation value or each combination of reconciliation values (RV1-3), the step of reconciling further comprises the steps of:
aggregating and storing the values retrieved from the data fields (14a,32a) of the identified matching SII and ASI records (SII1-4, ASI1-6) into respectively a set of corresponding SII Reconciliation, SIIR, data fields (35a) and a set of ASI Reconciliation, ASIR, data fields (35b) of at least one Reconciliation Item (RI) record (38), the Reconciliation Item record stored in a Reconciliation record database (24) in the form of at least one Reconciliation Item, RI, table,
reconciling the identified matched SII records (SII1-4) with the corresponding matched ASI records (ASI1-6) by comparing the values stored in the SIIR fields (35a) with the values stored in the corresponding ASIR fields (35b) of the at least one RI record (38) so as to identify any differences,
storing the values of the comparison in a set of reconciliation data fields (36a) of the at least one RI record (38), and
updating the RI record (38) with a reconciliation status (36b) indicating the status of the reconciliation.
